# EUROPEAN PATENT APPLICATION

(11) **EP 3 697 069 A1**
(43) Date of publication of application: **19.08.2020**
(21) Application number: 19157261.9
(22) Date of filing: 14.02.2019
(51) Int. Cl.: H04M 3/527, H04M 3/493, H04M 3/56

(54) **METHOD FOR PROVIDING A DIGITAL ASSISTANT IN A COMMUNICATION SESSION AND ASSOCIATED COMMUNICATION NETWORK**

(71) Applicant: Nokia Solutions and Networks Oy, 02610 Espoo (FI)
(72) Inventor: SOMOGYI, Gabor, 1114 Budapest (HU)
(74) Representative: Novagraaf Technologies

(57) **Abstract**

The invention relates to a method for providing a digital assistant during a communication session over a telecommunication system comprising at least a communication network, the communication session being established between at least a first party and a second party. The method comprises the steps of:
- detecting (301), by the communication network, an assistance request, said assistance request being delivered by one of said first and second parties, called requesting party;
- activating (302) a digital assistant within said communication network in response to said assistance request; and
- adding (303) said digital assistant as an additional party to the communication session.

## Description

### TECHNICAL FIELD

Various embodiments of the present invention relates generally to the provision of a digital assistant to at least one party or participant of communication session in a telecommunication system.

### BACKGROUND

Voice controlled intelligent devices, commonly called digital assistants or intelligent assistants, such as for example Amazon Alexa™, Apple Siri™ or Google Assistant™ are commonplace nowadays. They operate on user's smart devices or as standalone gadgets. They can be used for various tasks, such as placing a call, sending messages or ordering pizza.

When the digital assistant operates on a user's smart device, like a user's smart phone, it can be activated during a communication session (audio call, video call, audio conference, video conference...) over a telecommunication system. In that case, when a user (called hereinafter local user or local party) asks for a digital assistant, the digital assistant running on his smart phone can be activated.

When the result delivered by the digital assistant is an audio stream, the latter may be audible to both session parties due to the presence of a microphone on the smart phone of the party requesting the digital assistant. When the result of the digital assistant is a text message or a video stream, the text message or video stream is only displayed on the screen of the smart phone of the local party (who asked for the digital assistant). In some cases, the text message or video stream may be transmitted to the other party (so-called remote session party) and is possibly displayed in a PIP (Picture in Picture) window on the screen of the smart phone of the remote party. But this solution is dependent of the type of user device (smart phone, tablet, smart watch, TV, PC ...) on which it is implemented and of its operating system. In particular, the video stream resulting from the digital assistant and sent to the local party is dependent from the user device of the local party.

There is thus a need to propose another solution to provide a digital assistant during a communication session over a telecommunication system.

### SUMMARY OF EXEMPLARY EMBODIMENTS

Some embodiments relate to a method for providing a digital assistant during a communication session over a telecommunication system comprising at least a communication network, the communication session being established between at least a first party and a second party, comprising the steps of:
- detecting, by the communication network, an assistance request, the assistance request being delivered by one of said first and second parties, called requesting party;
- activating a digital assistant within the communication network in response to the assistance request; and
- adding the digital assistant as an additional party to the communication session.

In some embodiments, the method further comprises the steps of
- detecting, by said digital assistant, of a task to be performed, said action being requested by one of said first and second parties; and
- performing said task by said digital assistant.

Hence, the digital assistant activated by the requesting party is part of the communication network and can be considered as a third party. The media streams issued by the digital assistance for performing the task may thus be considered as a stream coming from a third party in a conference session. These streams can therefore be easily transmitted to one of the first and second parties or to both parties.

In some embodiments, the digital assistant is included in a part of the communication network associated to the requesting party. The digital assistant may be included in the home network associated to one of the first and second parties within the communication network.

In some embodiments, the task to be performed is only requested by the requesting party (and not the other party of the communication session).

In some embodiments, a result of the task performed by the digital assistant, for example a media stream, is provided to the requesting party or to both first and second parties.

In some embodiments, the digital assistant is included in a part of the communication network, such as a home network, associated to the requesting party.

In some embodiments, the assistance request is a wake-up signal for activating the digital assistant.

In some embodiments, the wake-up signal is a word or a speech, this word or speech being detected by a word detector within the communication network and this word detector activating said digital assistant when said word or speech is detected.

In some embodiments, when the digital assistant is activated in a video session, a video stream indicating that a digital assistant is activated is generated and is sent to the first and second parties as long as the digital assistant is activated during said video session. This video stream shows a visual representation or an appearance of the digital assistant.

In some embodiments, this video stream is configurable by the requesting party.

Embodiments of the invention relate to a communication network for establishing a communication session between at least a first party and a second party, wherein the communication network comprises a home network for each of the first and second parties, wherein at least the home network associated to the first party comprises
- a digital assistant configured to detect a task to be performed requested by said first party;
- means for detecting an assistance request, said assistance request being delivered by said first party, and for activating the digital assistant in response to said assistance request, and
- means for adding said digital assistant as an additional party to the communication session when activated.

In some embodiments, when the digital assistant is activated in a video session, the home network associated to the first party further comprises means for generating a video stream indicating that a digital assistant is activated and sending said video stream to the first and second parties as long as the digital assistant is activated during the video session.

In some embodiments, the home network associated to the first party further comprises means for maintaining a list of the parties to the communication session.

Additional aspects of embodiments will be set forth, in part, in the detailed description, figures and any claims which follow, and in part will be derived from the detailed description. It is to be understood that both the foregoing general description and the following detailed description are only exemplary and do not limit the claimed inventions.

### Brief Description of the Drawings

Some embodiments of apparatus and/or methods will become more fully understood from the detailed description given herein below and the accompanying drawings which are given by way of illustration only and thus are not limiting of the present invention and wherein:
Figure 1 schematically depicts a telecommunication system providing a digital assistant to a least one party during a communication session between two parties according to some embodiments of the invention;
Figure 2a-2e schematically illustrate the provision of a digital assistant in a communication session in an IMS based telecommunication system according to some embodiments of the invention;
Figure 3 is a flow chart showing the steps for providing a digital assistant DA system according to some embodiments of the invention;
Figure 4 schematically illustrate an IMS (Internet Protocol Multimedia Subsystem) based telecommunication system compliant with 3GPP standard system according to some embodiments of the invention;
Figure 5 depicts a sequence of steps done at activating DA in a video conversation system according to some embodiments of the invention; and
Figure 6 depicts a sequence of steps done at deactivating DA system according to some embodiments of the invention.

### DETAILED DESCRIPTION

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising," "includes" and/ or "including", when used herein, specify the presence of stated features, integers, steps, operations, elements and /or components, but do not preclude the presence or addition of one or more other features, integers, steps, operations, elements, components and /or groups thereof. Similarly, it is to be noticed that the term "coupled" should not be interpreted as being restricted to direct connections only. Thus, the scope of the expression "a device A coupled to a device B" should not be limited to devices or systems wherein an output of device A is directly connected to an input of device B. It means that there exists a path between an output of device A and an input of device B which may be a path including other devices or means. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

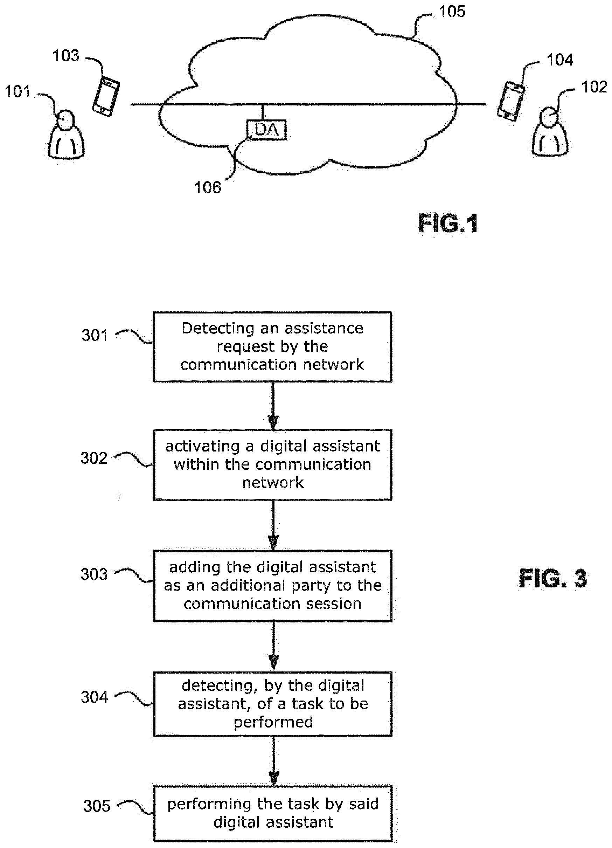

**Figure 1** shows an illustrative telecommunication environment 100 in which two users 101, 102 employs respective devices 103, 104 that communicate over a communication network 105. The devices 103, 104 provide video and audio transmission capabilities and applications such as Internet browsing and messaging. The devices 103,104 are user equipments (UEs) such as smart phones, mobile phones, tablet computers, laptops or desktop computers. In the discussion that follows, the term "device" designate any device that is configured with communication capabilities and is capable of connectivity to the communications network 105. The term "party" designates the device or the user using this device.

The communication network 105 is configured to support any type of communication sessions. The communication session include for example voice calls, video calls, messaging conversations, audio conference or video conference between at least two parties. A digital assistant may be requested during a communication session. In that case, as illustrated by figure 1, the digital assistant 106 is provided by the communication network 105.

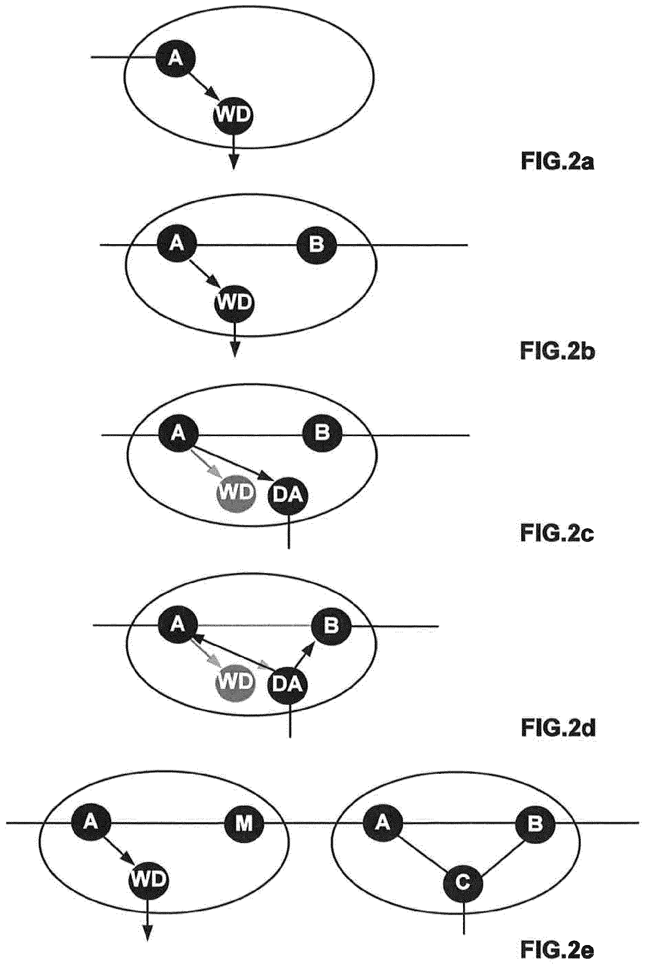

According to an embodiment, the communication network 105 is configured to consider the digital assistant 106 as a third party to the communication session. This will be described in more detail in reference to the Figure 2.

The digital assistant 106 may be active throughout the whole session (as long as the communication session is established) or may be activated by an assistance request delivered by one of the first and second parties. This assistance request is for example a predetermined wake-up signal, such as a speech signal or wake-up word like "Hey, Switch". The digital assistant is thus active only when this wake-up word is pronounced during the session. In this embodiment, the wake-up word can be for example detected by a word detector (not shown in figure 1) within the communication network 105 and, in response to this detection, the word detector activates the digital assistant 106. Likewise, the digital assistant may be deactivated by a sleep signal, such as "Good Bye Switch". This signal is detected by the word detector so as to deactivate the digital assistant.

As a variant, the wake-up signal may be a gesture. In that case, the gesture may be detected by a gesture detector within the communication network 105 using image processing on images coming from the camera of the user device 103 or 104.

Once the digital assistant 106 is activated, it is added as a third party to the communication session and is considered as such by the communication network 105.

When activated, the digital assistant 106 can perform various tasks associated to voice commands or gesture commands. Examples of voice commands and associated task are given as follows:
- "Hold the line" - to perform call hold;
- "Add Jane to the call" - to call Jane plus transfer the existing call to a conference server;
- "Order a pizza" - searching a locally available pizza service to the call and add it to the call.
- "What the weather will be tomorrow" - find weather data using location of the party asking the assistance and make both parties listen to the answer;
- "Record this call" - to record the call and provide ways the parties to access that recording later;
- Play music xxx" - to play a hit the parties want to listen together.

When these tasks requires to send a result (for example, a video stream, an audio stream, a text message,...), the result is sent to one or both parties.

The task can also be performed automatically without specific voice command. A task example is the automatic translation between different languages spoken during a communication session. The digital assistant may perform automatically this task as soon as it detects that the session parties use different languages at the beginning of the communication session. This detection may be operated in the word detector detecting the wake-up signal.

**Figure 2a-2e** schematically illustrate the provision of a digital assistant in a communication session between a party A and a party B in a IMS based telecommunication system according to an embodiment. These figures refer to resources or devices defined in 3GPP IMS standard (TS 23.002). In these figures, the media paths and resources are illustrated in the following way:
- the big oval represents the media context of a session, as seen by an application server or AS, such as an IMS or "home" AS, that provides services to a calling party;
- the black circle with "A" represents the party who needs digital assistance;
- the black circle with "B" represents the party who has a session with "A";
- the black circle with "WD" represents a word detector, this detector being activated; this circle is greyed when this detector is inactivated or deleted;
- the black circle with "DA" represents a digital assistant;
- the straight lines represent media paths; the direction of path may be bidirectional;
- the arrows (or directed lines) represent media path where media may flow in one direction; and
- the greyed lines mean that they are inactive or deleted.

Referring to **Figure 2a**, the party A initiates a session. The Application Server AS establishes a media path with the word detector WD. The word detector is a piece of software running in a Media Gateway (MGW) or Media Resource Function (MRF). The AS may check HLR (Home Location Register) / HSS (Home Subscriber Server) data to determine whether the party A is authorized to use Digital Assistant.

When a session is established between A and B, media flows between them **(****figure 2b****)** and the word detector WD listens to the party A only. That protects A from B being able to activate the digital assistant. When the word detector WD detects a wake-up word, it activates the digital assistant DA (**figure 2c**). The word detector WD may be isolated from A (greyed arrow) or may be deleted or inactivated (Greyed circle) when the digital assistant DA is active. In a first phase, the digital assistant DA listens to commands of A. Media path between DA and A may be unidirectional toward DA. Media from B is not directed to DA to avoid B giving commands to DA. At this phase media path between the parties A and B may remain unchanged.

When, in response to a command (action requested by A), DA is ready to play a media, DA plays media to both parties A and B (**figure 2d**). During playing that media, the media path between A and B may become isolated (greyed line). That isolation is an optional optimization, so that mixing media of the opposite party (A or B) and DA could be avoided. Media path between A and DA is unidirectional, DA playing media to "A". As a variant, media path between DA and A is bidirectional, A being able to further interact with DA. As an example, A may order DA to cancel its action.

WD may play a tone or AS may order another resource to play a tone to A or both parties when the wake-up word is detected or when DA is going to be activated. So the media flow between WD and "A" may change. To avoid the cost of mixing media from WD and B, the media path between WD and A may not be bidirectional throughout the session.

Likewise, DA may play a tone or AS may order another resource to play a tone to A or both parties when it got activated. Similarly tone may be played when DA is to be removed from media path or when DA operation ends.

Furthermore, DA may perform call actions. To achieve that, DA may send related signals to AS via its API (Application Programming Interface).

Call actions can be adding another party C or voice service (e.g. IVR) to the session. That makes the original session becoming a conference, and a conference mixer is to be added. DA may signal AS to create a call with the party to be added and transfer the existing B to the conference mixer. A, WD and DA connections of "A" may remain in the original media context and a connection toward the conference mixer is placed where B used to be (**Figure 2e**). In this figure, C may be the DA as well.

When interacting with DA is not needed any further, it may signal AS to restore the media flow like it was before connecting DA to the flow. That may restore media flow between "A" and "B", as well as "A" and WD.

**Figure 3** is a flow chart showing the steps for providing a digital assistant DA during a communication session between parties A and B over a telecommunication system comprising a communication network, the communication session being established between at least the parties A and B.

In step 301, an assistance request, for example "Hey, Switch", is detected by the communication network, the assistance request being delivered by the party A or B, called requesting party.

In step 302, a digital assistant within the communication network is activated in response to the assistance request.

In step 303, the digital assistant is added as an additional party to the communication session.

The digital assistant may be thus be activated to perform a task.

In step 304, the digital assistant detects a task to be performed, this task being requested by the requesting party. In a variant, the task is requested by any one of the parties A and B.

In step 305, the task is performed by the digital assistant. The result of the task, such as a media stream, is provided only to the requesting party. As a variant, the result is provided to both parties.

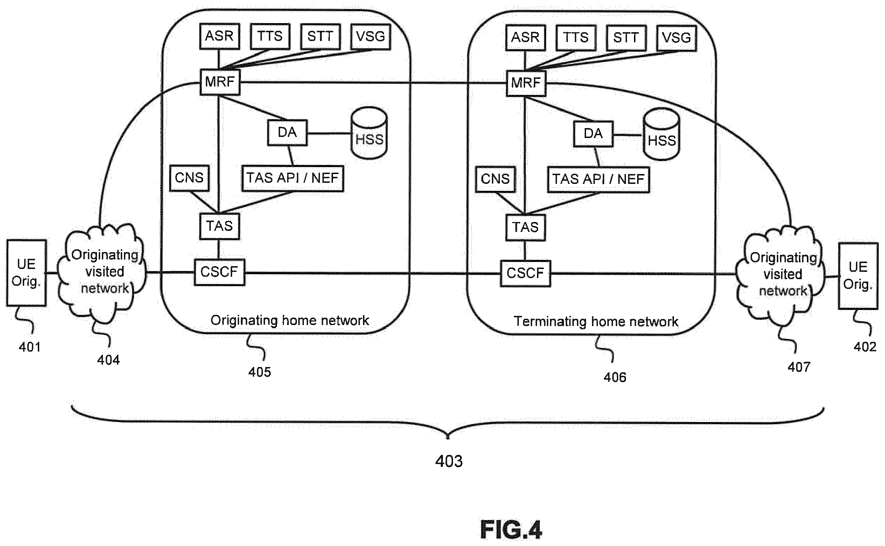

**Figure 4** schematically illustrate an IMS (Internet Protocol Multimedia Subsystem) based telecommunication system compliant with 3GPP standard configured to implement the method described hereinabove.

In Figure 4, an originating session party 401 (for example party A) communicate with a terminating session party 402 (for example party B) over the IMS based telecommunication system 403. The originating session and terminating session parties 401, 402 communicate together via an originating visited network 404, an originating home network 405, a terminating home network 406 and a terminating visited network 407.

The originating home network 404 and the terminating home network 405 designates respectively the networks the originating session and terminating session parties are registered with. The originating visited network 404 and the terminating home network 405 designate respectively the network the originating session is registered with and the network the terminating session is registered with.

The originating visited network 404 and the terminating home network 405 each includes the following nodes or resources defined in 3GPP IMS standard (TS 23.002):
- a Telephone Application Server TAS which may be a 3GPP defined MMTEL AS, SCC AS, a combination of such application servers, a different one or a standalone signaling node;
- a Call Session Control Function CSCF which is a node which serves the calls; CSCF adds TAS to the signaling so that it can adds its services;
- a Conference Notification Service CNS which keeps a list of conference/call participants and sends notifications to subscribed parties;
- a Home subscriber Server HSS;
- a Multimedia Resource Function MRF;
- an Automatic Speech Recognition ASR or a Natural Language Processor NLP;
- a Text-to-Speech TTS; and
- a Speech-to-Text STT.

It also comprises a NEF (Network Exposure Function) which is a new 5G node with a standard interface so that internet services, e.g. other digital assistants, banks, cars and other devices can easily interact with a communication network.

To implement digital assistance as defined before, these resources or nodes are completed by a DA (digital assistant), and a VSG (Video Stream Generator). DA is a digital assistant which can ask TAS to perform various actions, such as adding a new party to a conference, providing audio or video from internet,.... DA is thus considered as a new party in the session.

When the telecommunication system provides a list of parties in the session then DA may be added to that list. CNS is used to keep a list of the parties of the session and sends notifications on changes to the parties. STT, ASR, TTS are nodes which make DA hear, understand and speak. VSG is a component which generates a video stream, e.g. in form of an RTP stream, showing a visual representation of the digital assistant. This aspect is described later in this document.

DA of the originating home network (respectively terminating home network) may be activated only by the session originating party (resp. the session terminating party). The word detector WD of Figures 2a-2e may be implemented in MRF or ASR.

As each of the originating and terminating session parties have their own home network, two DAs (one DA for each party) may be activated during a same communication session between these parties.

The digital assistant DA is seen as an additional party (third party) on top of the session originating party and the session terminating party such that data streams may be exchanged between any couple of parties among them.

When there are several parties in a communication session, such as a phone or video telephone conversation, not all of them may be aware of the presence of a DA. When one party activates a DA, it may be beneficial or may be legal requirement the other parties of the session to be aware of the presence of this DA.

When DA joins a session in audio form only, it may send an audio signal of joining the session. That also prompts that it is ready to accept commands and requests. When DA join a session in multimedia form (which includes video), then it may be beneficial or legal requirement that the parties of the session to be able to recognize the presence of DA in various media forms, such as visible presence of DA. To this end, the Video Stream Generator VSG is used to generate a video stream showing a visual representation (appearance) of the DA and this video stream is added to the video session in order to visible by all the parties. The video stream may be generated several ways, including:
a) a static image showing an appearance of the DA, such as a line drawing representing a human face;
b) an animation making gestures and/or hand signs.
c) an animation showing moving lips;
d) an animation showing moving lips based on voice activity detection when an audio stream or a video stream is generated as a task by DA; or
e) an animation showing moving lips based on a speech generated by TTS from a text generated by DA.

The DA is thus presented with its own video stream on the devices of all the parties. It is beneficial for several reasons:
- as the DA is a third party, it may be puzzling during video conversation if an invisible party speaks or intervenes; and
- seeing another party joining allows each party to be aware of the presence of the DA.

When DA is generating valuable content, such as making audio announcement, then DA may become in the focus of the video call session, e.g. shown in bigger size or be brightened or shown in strong frame.

In a conversation there may be several DAs of several parties. To know a DA belongs to which party the DA may not show in a separate visual field, but as an overlay on its related party (party having requested the DA). The original video stream of the related party may be replaced with the one with the overlay.

To know a DA belongs to which party the DA may be shown side-by-side with its related party. As a variant, to know a DA belongs to which party the DA may be shown side-by-side in a shared frame with its related party. The original video stream of the party subscriber may be replaced with the one with the overlay. As another variant, to know a DA belongs to which party the DA may have a caption associating it with its related party.

DA may be presented in the session in some of all forms during the whole session. But it may be more convenient and may save resources if DA is presented only when it is active.

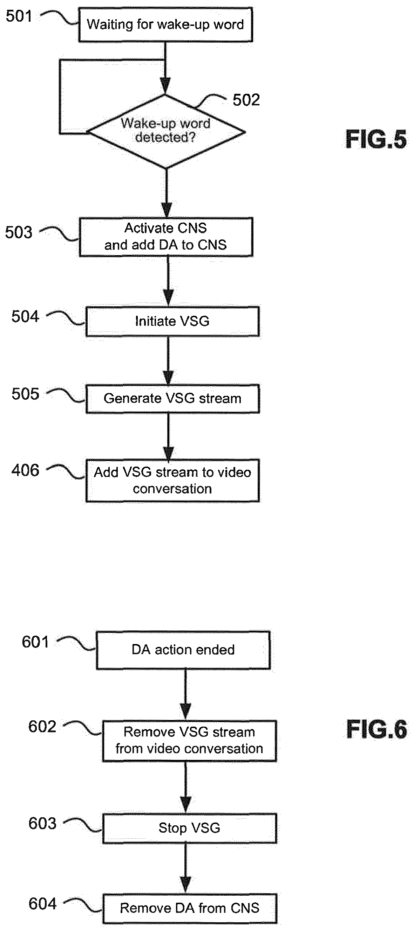

**Figure 5** depicts a possible sequence of steps done at activating DA in a video conversation. In a step 501, the system is waiting for a wake-up word such as "Hey, Switch". When a wake-up word is detected in step 502, the DA is activated and the DA is added to CNS in step 503. CNS is used to keep a list of the parties of the session. That allows subscribing for changes and notifies subscribed parties of any changes. In step 504, The VSG is initiated in order to provide a video stream including an appearance of the DA. In step 505, the VSG stream is generated and, in step 506, the VSG stream is added to the video conversation.

Initiating VSG and adding DA to CNS are not dependent and may be done in another order or in parallel.

Activating VSG may happen in a way that a session is initiated between MRF and VSG, e.g. by using SIP protocol. Media formats may be negotiated using SDP protocol.

DA may be removed from the session. Deactivating video stream of DA may happen by clearing the session of VSG. SIP protocol may be used. **Figure 6** depicts a possible sequence of steps done at deactivating DA. In step 601, the action of DA is deactivated or ended. In step 602, the VSG stream is removed from the video conversation. In step 603, the VSG is stopped and, in step 604, the DA is removed from CNS.

Stopping VSG and removing DA from CNS are not dependent and may be done in another order or in parallel.

The properties of DA, such as its behavior, its appearance, its voice or its smell may be configurable by the party. The configuration may be stored in a database, such as 3GPP HSS. The appearance of DA in video stream may be have various parameters, including
a) kind of DA, such as human, cat, dog, computer etc;
b) skin color;
c) skin pattern, texture, including tattoo;
d) hair style, color and pattern;
e) lip size and color;
f) clothing;
g) sex;
h) lighting conditions;
i) background including buildings, vehicles, various celestial bodies and planet surfaces.

In the above, the digital assistant is activated during a communication session between two parties. In a variant, the local party may dial digital assistant directly or using a specific application on its user device, such as voice activation. In such case there is no other session party present. To provide a natural user experience VSG generated stream is thus presented on the user equipment of the local party like any video session party. And no overlay PIP is used.

In some embodiments, DA may be provided in form of a telecommunication service. DA functionality may be provided by the telecommunication service provider. DA service may be provided by a service provider which uses the core components of the telecommunication service.

In some embodiments, using the digital assistant DA may be a chargeable event. MRF may report on DA triggering. It may report the actual service used toward a charging function or the Telephone Application Server (TAS). For example, the word detector WD may signal the TAS or a charging function that call word is detected. This may register the event. The TAS or the charging function may then authorize or reject the DA being activated. DA may also signal TAS or a charging function that it is activated. DA may also signal the category or exact operation it is performing.

Thanks to these embodiments, a digital assistant may be managed as a third party in a communication session between parties. Its activation and deactivation are simple to be performed. As DA is a network service, it works on any type of user device (smart phone, tablet, smart watch, TV, PC, laptop,...) regardless of the manufacturer and on any operating system. It also works with standard devices without additional software to make the assistant appear. And, finally, with this solution, it is easy to make the digital assistant look like a living person speaking, as the voice and video stream are generated close to each other.

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

## Claims

1. Method for providing a digital assistant during a communication session over a telecommunication system comprising at least a communication network, said communication session being established between at least a first party and a second party, comprising the steps of:
- detecting (301), by the communication network, an assistance request, said assistance request being delivered by one of said first and second parties, called requesting party;
- activating (302) a digital assistant within said communication network in response to said assistance request; and
- adding (303) said digital assistant as an additional party to the communication session.

2. Method according to claim 1, wherein it further comprises the steps of:
- detecting (304), by said digital assistant, of a task to be performed, said task being requested by one of said first and second parties; and
- performing (305) said task by said digital assistant.

3. Method according to claim 2, wherein the task to be performed is requested by the requesting party and by other party of the communication session.

4. Method according to claim 2 or 3, wherein a result of the task performed by the digital assistant, such as a media stream, is provided to the requesting party.

5. Method according to claim 2 or 3, wherein a result of the task performed by the digital assistant, such as a media stream, is provided to both first and second parties.

6. Method according to any one of the preceding claims, wherein the digital assistant is included in a part of the communication network, such as a home network, associated to the requesting party.

7. Method according to any one of the preceding claims, wherein the assistance request is a wake-up signal for activating the digital assistant.

8. Method according to claim 7, wherein the wake-up signal is a word or a speech, said word or speech being detected by a word detector within the communication network and said word detector activating said digital assistant when said word or speech is detected.

9. Method according to any one of the preceding claims, wherein, when the digital assistant is activated in a video session, a video stream indicating that a digital assistant is activated is generated and is sent to said at least first and second parties as long as the digital assistant is activated during said video session.

10. Method according to claim 9, wherein said video stream shows a visual representation of the digital assistant.

11. Method according to any one of the preceding claims, wherein said video stream is configurable by the requesting party.

12. Communication network for establishing a communication session between at least a first party (401) and a second party (402), wherein said communication network comprises a home network (405, 406) for each of the first and second parties, wherein at least the home network associated to the first party (405) comprises
- a digital assistant (DA) configured to detect a task to be performed requested by said first party;
- means (MRF) for detecting an assistance request, said assistance request being delivered by said first party, and for activating the digital assistant in response to said assistance request, and
- means (TAS) for adding said digital assistant as an additional party to the communication session when activated.

13. Communication network according to claim 12, wherein, when the digital assistant is activated in a video session, the home network associated to the first party further comprises means (VSG) for generating a video stream indicating that a digital assistant (DA) is activated and sending said video stream to said at least first and second parties as long as the digital assistant is activated during the video session.

14. Communication network according to claim 12 or 13, wherein, the home network associated to the first party further comprises means (CNS) for maintaining a list of the parties to the communication session.
